# NEW EUROPEAN PATENT SPECIFICATION

(11) **EP 3 072 628 B2**
(45) Date of publication and mention of the opposition decision: **20.07.2022**
(45) Mention of the grant of the patent: 20.12.2017
(21) Application number: 16162420.0
(22) Date of filing: 24.03.2016
(51) Int. Cl.: B23K 26/06, B23K 26/0622, B23K 26/382, B23K 101/00, B23K 101/34, B23K 103/18

(54) **LASER DRILLING THROUGH MULTI-LAYER COMPONENTS USING PULSE IN THE MILLISECOND RANGE AND HAVING VARYING ENERGY OVER TIME**
LASERBOHREN DURCH MEHRSCHICHTIGE KOMPONENTEN UNTER VERWENDUNG VON PULS IN DEM MILLISEKUNDBEREICH UND ÜBER ZEIT VARIIRENDER ENERGIE
FORAGE LASER À TRAVERS DES COMPOSANTS MULTICOUCHES UTILISANT UN PULSE DANS LE DOMAINE DE LA MILLISECONDE ET AYANT UNE ÉNERGIE VARIANT DANS LE TEMPS

(30) Priority: 26.03.2015 US 201514669071
(43) Date of publication of application: 28.09.2016
(73) Proprietor: Pratt & Whitney Canada Corp., Longueuil, Québec J4G 1A1 (CA)
(72) Inventor: STRACH, Ludwik, Longueuil, Québec J4G 1A1 (CA)
(74) Representative: Dehns

(56) References cited:
- CN-A- 103 990 910
- JP-A- 2000 301 372
- US-A- 5 841 099
- US-A1- 2002 040 893
- US-A1- 2012 111 841

## Description

### TECHNICAL FIELD

The present invention relates to a method of drilling a hole in a component having two or more layers of materials, whereby drilling is performed by means of a laser emitting device.

### BACKGROUND OF THE ART

Standard drilling methods are based on laser pulses repetitively fired at one position on a component, thus producing a hole.

Although laser drilling has many advantages, when drilling through components having multiple layers, cracks may form at the interface of the different layers. There is a need to minimize such cracking.

CN 103990910, on which the preamble of claim 1 is based, discloses an air film cooling hole manufacturing method of a turbine blade with a thermal barrier coating. When a small hole is machined on the turbine blade with the thermal barrier coating using a laser, defocusing millisecond laser is firstly utilized to perform rotary cutting in a ceramic layer to obtain a taper hole mainly for reducing the influence of thermal stress and melting spraying stress, and then the defocusing millisecond laser is used for machining the turbine blade base portion.

US 2012/111841 discloses using a series of laser pulses, each pulse characterized by one or more predetermined pulse characteristics including wavelength, pulse energy, inter-pulse time interval, pulse width or pulse shape, to drill a hole in a material.

### SUMMARY

There is described herein a method of drilling holes in components having multiple layers of materials using a laser emitting device, by controlling the laser pulses in such a way that cracks at the interfaces between the various materials are minimized or eliminated.

The present invention provides a method, as defined in claim 1, of drilling a hole in a component with a laser, the component composed of at least a first layer of a first material and a second layer of a second material different from the first material.

In some embodiments, at least one of generating at least one first layer pulse and generating at least one second layer pulse comprises generating the single pulse multiple times.

In some embodiments, applying at least one second layer pulse comprises generating a different number of pulses to the second layer than generated for the first layer.

In some embodiments, the method further comprises setting a first layer laser frequency and setting a second layer laser frequency, and wherein generating at least one first layer pulse with a laser comprises using the first layer laser frequency and generating at least one second layer pulse with the laser comprises using the second layer laser frequency.

In some embodiments, setting a second layer laser frequency comprises selecting a laser frequency different from the first layer laser frequency.

In some embodiments, generating the at least one first layer pulse comprises generating a pulse with a first spot size and generating the at least one second layer pulse comprises generating a pulse with a second spot size different from the first spot size.

In some embodiments, a diameter of the spot size is from about 0.1 mm to about 0.5 mm.

In some embodiments, the method further comprises drilling through the first layer by applying at least one first pulse from a laser; and drilling through the second layer by applying at least one second pulse from the laser, at least one of the first pulse duration and the first pulse shape being different from the second pulse duration and the second pulse shape, respectively.

In some embodiments, at least one of applying at least one first pulse and applying at least one second pulse comprises repeatedly applying the single pulse until having drilled through a respective one of the first layer and the second layer.

In some embodiments, at least one of applying at least one first pulse and applying at least one second pulse comprises applying a single one of the at least one first pulse and the at least one second pulse to drill through a respective one of the first layer and the second layer.

In some embodiments, applying at least one first pulse comprises applying a first plurality of segmented and repeated pulses to drill through the first layer, and wherein applying at least one second pulse comprises applying a second plurality of segmented and repeated pulses to drill through the second layer.

In some embodiments, the first plurality of segmented and repeated pulses differ from the second plurality of segmented and repeated pulses in at least one of duration and shape.

In some embodiments, the first plurality of segmented and repeated pulses differ from the second plurality of segmented and repeated pulses in at least one of number of segments per pulse and duration of each segment.

### BRIEF DESCRIPTION OF THE DRAWINGS

Further features and advantages of the present invention will become apparent from the following detailed description, taken in combination with the appended drawings, in which:
Fig. 1 is a top perspective view of an exemplary component having a first layer and a second layer and a hole drilled therethrough;
Fig. 2 is a cross-sectional view of an exemplary component having a first layer that acts as a coating to a second layer, with a hole drilled therethrough;
Fig. 3a is an exemplary embodiment of a system for drilling holes in components having multiple layers;
Fig. 3b is another exemplary embodiment of a system for drilling holes in components having multiple layers;
Fig. 4 is a block diagram of an exemplary embodiment for a control unit in the system of figures 3a or 3b;
Fig. 5 is a flowchart of an exemplary method for drilling holes in components having multiple layers;
Fig. 6a is a graph of a pulse train as per the prior art;
Fig. 6b is a graph of a pulse train with pulses having a varying energy level over time, in accordance with one embodiment;
Fig. 6c is a graph of pulse trains for multiple layers, in accordance with one embodiment; and
Fig. 7 is a cross-sectional view of the component of figure 1.

It will be noted that throughout the appended drawings, like features are identified by like reference numerals.

### DETAILED DESCRIPTION

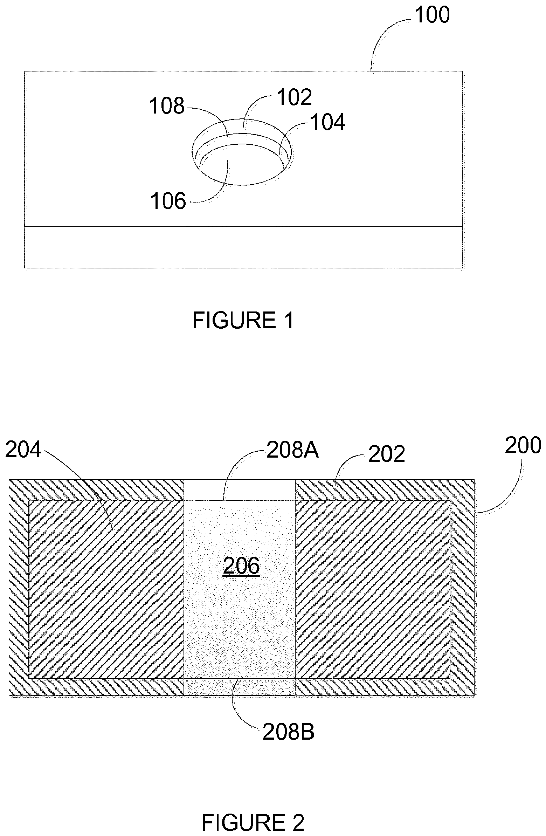

Figure 1 is an exemplary embodiment of a component 100 formed from a first layer 102 and a second layer 104, seen through a hole 106 drilled therethrough. An interface 108 forms a common boundary between the first layer 102 and the second layer 104. The component 100 may be an aircraft component, such as a blade, vane, or heat shield. The component 100 may be used for other types of vehicles, such as ships, trains, and automobiles, or for other applications, such as power plants, wind turbines, and damns. The component 100 may be a composite material, made from two or more constituent materials. The component 100 may also comprise one or more primary materials forming a substrate, such as metal, plastic, ceramic, glass, concrete, and/or polymer, and one or more coating materials, such as a thermal barrier coating (TBC), a paint, and/or a lacquer. An exemplary embodiment is illustrated in figure 2, whereby a component 200 is formed of a first layer 202 that acts as a coating on a second layer 204. A hole 206 is shown to have been drilled through the top coating of the first layer 202, the second layer 204, and the bottom coating of the first layer 202. In this example, a first interface 208a is at the boundary between the top coating of the first layer 202 and the second layer 204, and a second interface 208b is at the boundary between the second layer 204 and the bottom coating of the first layer 202. The technique described herein is used to minimize and/or eliminate the cracks that may occur at interfaces 108, 208a, 208b, due to the differences in the properties of the various materials making up the layers of the components 100, 200, and thus the differences in optimal drilling parameters for each layer.

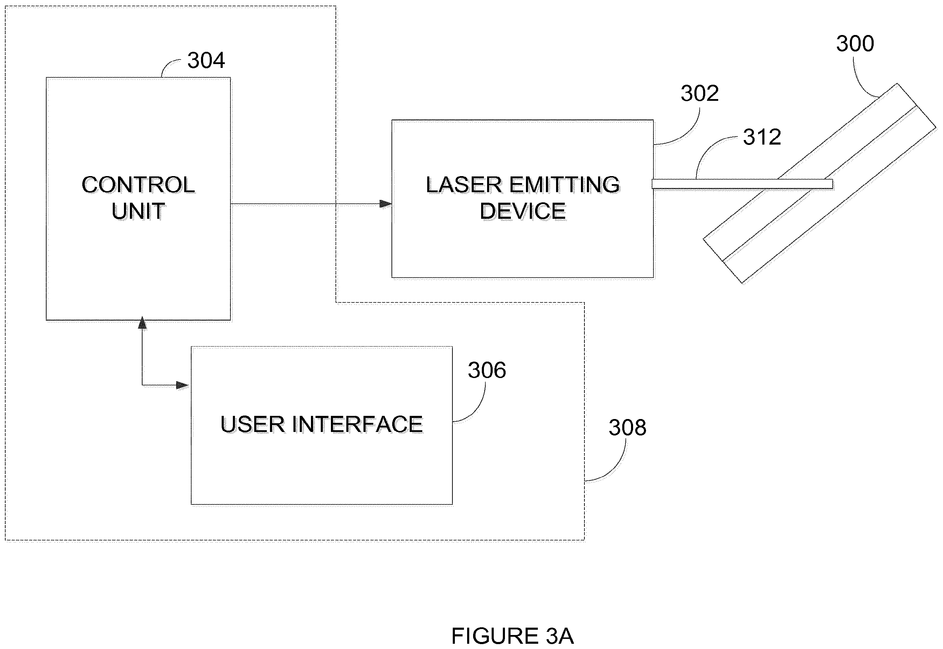

Figure 3a illustrates an exemplary embodiment of a system for drilling holes in a component 300 composed of at least a first layer and a second layer of material. A laser emitting device 302 generates a beam 312 for drilling a hole in the component 300. The laser emitting device 302 may include a laser, focusing optics, and any other elements used to generate and emit the laser beam 312, such as a power supply. The laser may be a fiber laser, a solid state laser, or a gas laser. In some embodiments, the laser is a lamp-pumped Nd:YAG laser that emits light with a wavelength of 1064 nm. In some embodiments, the laser is a multimode (MM) fiber laser that emits light with a wavelength of 1070 nm. Other types of lasers that operate in the infrared or near-infrared range at a wavelength of about 1080 nm or less may also be used. The laser emitting device 302 generates pulses in the millisecond range in order to drill through the material using a thermal effect. The thermal effect comprises heating, melting, and/or vaporizing of the material. The pulses may thus be of a duration that ranges from about 0.1 milliseconds to about 10 milliseconds, and in some embodiments about 0.6 milliseconds to about 1.0 milliseconds. Each pulse may have an energy from about 1 Joule to about 150 Joules. In some embodiments, the hole to be drilled corresponds to the size of the beam 312 , which may range from about 0.1 mm to about 1.0 mm, and in some embodiments from about 0.1 to about 0.5 mm, or from about 0.5 to about 0.75 mm (in diameter). The spot size may be changed from layer to layer as a function of the material. The spot size may be maintained constant throughout a given layer.

A control unit 304 is operatively connected to the laser emitting device 302. The connection may be a wired or wireless connection, such that the control unit 304 may transmit command signals to the laser emitting device 302 for generating the laser beam 312. A user interface 306 is operatively connected to the control unit 304, for causing the control unit 304 to set pulse parameters for drilling through the layers of the component 300. In some embodiments, the control unit 304 and the user interface 306 are provided separately and are connected together through a wired or wireless connection. Alternatively, the user interface 306 is integrated with the control unit 304 as a single device 308. For example, the user interface 306 may be a control panel provided on the device 308. In some embodiments, the device 308 is a power supply and the control unit 304 is a hardware and/or software component inside the power supply. Alternatively, the device 308 is provided externally to the power supply, which is part of the laser emitting device 302.

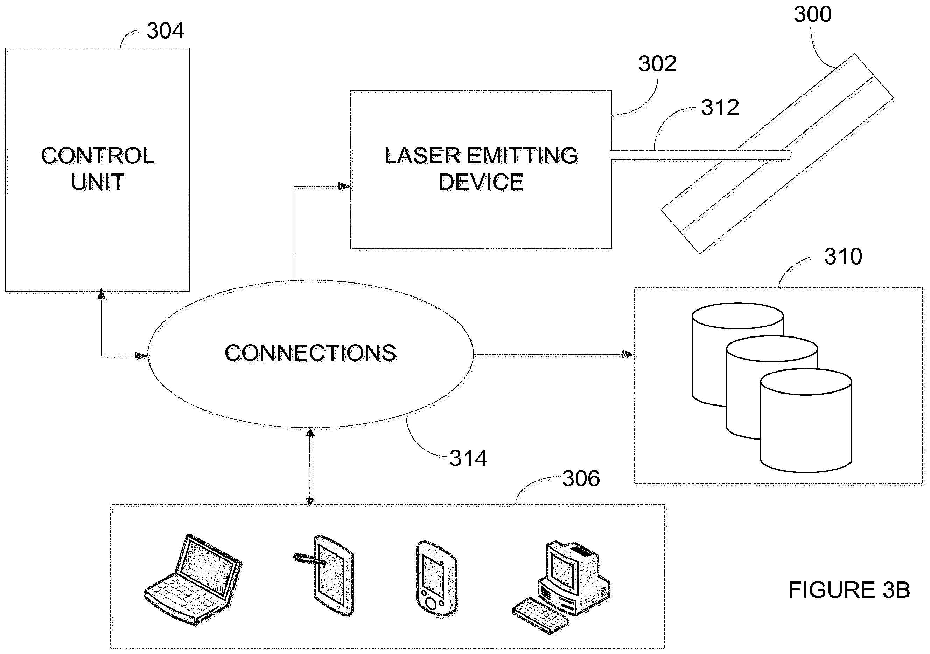

Figure 3b is an exemplary embodiment whereby the user interface 306 is a computing device. The control unit 304 may be accessible remotely from any one of the computing devices over connections 314. The computing device may comprise any device, such as a personal computer, a tablet, a smart phone, or the like, which is configured to communicate over the connections 314 with the control unit 304. In some embodiments, the control unit 304 may itself be provided directly on one of the computing devices, either as a downloaded software application, a firmware application, or a combination thereof. The laser emitting device 302 may also be accessible by the control unit 304 via the connections 314.

Various types of connections 314 may be provided to allow the user interface 306 to communicate with the control unit 304 and/or the control unit 304 to communicate with the laser emitting device 302. For example, the connections 314 may comprise wire-based technology, such as electrical wires or cables, and/or optical fibers. The connections 314 may also be wireless, such as RF, infrared, Wi-Fi, Bluetooth, and others. Connections 314 may therefore comprise a network, such as the Internet, the Public Switch Telephone Network (PSTN), a cellular network, or others known to those skilled in the art. Communication over the network may occur using any known communication protocols that enable devices within a computer network to exchange information. Examples of protocols are as follows: IP (Internet Protocol), UDP (User Datagram Protocol), TCP (Transmission Control Protocol), DHCP (Dynamic Host Configuration Protocol), HTTP (Hypertext Transfer Protocol), FTP (File Transfer Protocol), Telnet (Telnet Remote Protocol), SSH (Secure Shell Remote Protocol). The connections 314 between the control unit 304 and the user interface 306 may be the same or different from the connections between the laser emitting device 302 and the control unit 304. For example, the laser emitting device 302 may be wired to the control unit 304 while the control unit 304 and the user interface 306 communicate wirelessly. Alternatively, both connections may be wired or wirelessly but using different technology.

One or more databases 310 may be integrated directly into the control unit 304 or any one of the devices forming the user interface 306, or may be provided separately therefrom (as illustrated). In the case of a remote access to the databases 310, access may occur via connections 314 taking the form of any type of network, as indicated above. The various databases 310 described herein may be provided as collections of data or information organized for rapid search and retrieval by a computer. The databases 310 may be structured to facilitate storage, retrieval, modification, and deletion of data in conjunction with various data-processing operations. The databases 310 may be any organization of data on a data storage medium, such as one or more servers. The databases 310 illustratively have stored therein any one of pulse durations, pulse shapes, material types, material thicknesses, drilling angles, and gas pressures.

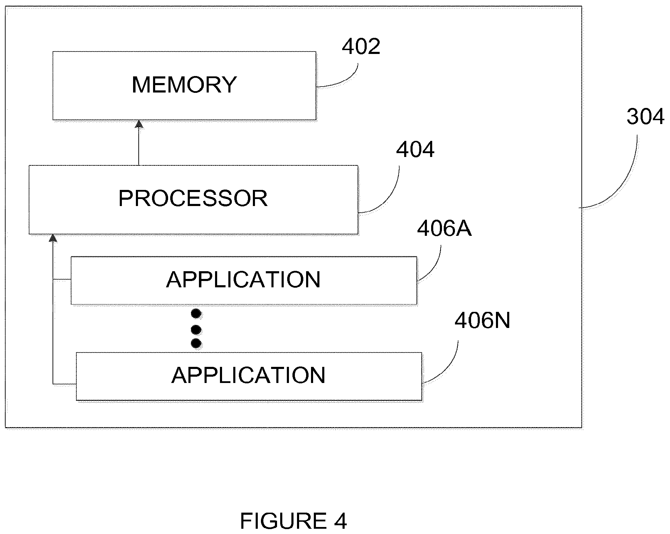

As shown in figure 4, the control unit 304 illustratively comprises, amongst other things, a plurality of applications 406a ... 406n running on a processor 404 coupled to a memory 402. It should be understood that while the applications 406a ... 406n presented herein are illustrated and described as separate entities, they may be combined or separated in a variety of ways. The memory 402 accessible by the processor 404 may receive and store data. The memory 402 may be a main memory, such as a high speed Random Access Memory (RAM), or an auxiliary storage unit, such as a hard disk, a floppy disk, or a magnetic tape drive. The memory 402 may be any other type of memory, such as a Read-Only Memory (ROM), or optical storage media such as a videodisc and a compact disc. The processor 404 may access the memory 402 to retrieve data. The processor 404 may be any device that can perform operations on data. Examples are a central processing unit (CPU), a front-end processor, a microprocessor, and a network processor. The applications 406a ... 406n are coupled to the processor 404 and configured to perform various tasks.

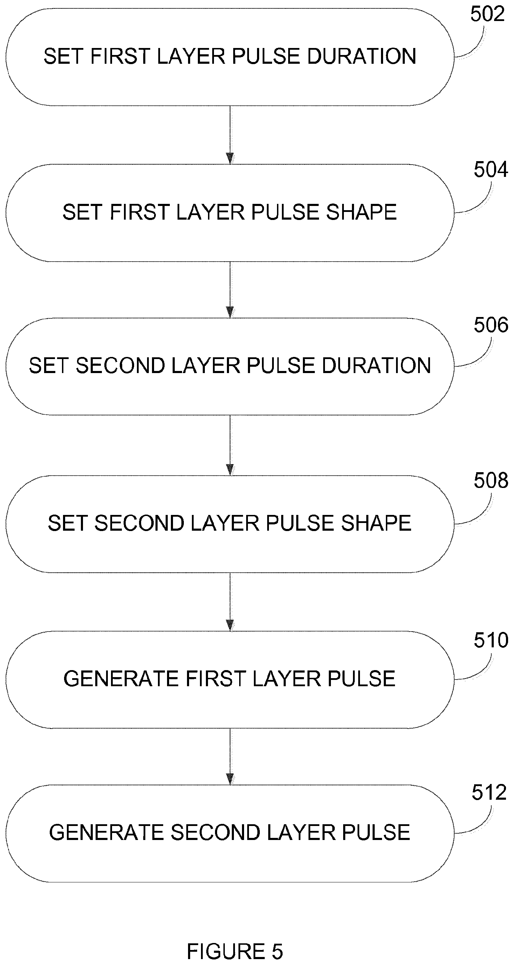

Figure 5 is an exemplary embodiment of a method for drilling holes in components composed of at least a first layer and a second layer of material. The user interface 306 is responsive to user input for causing the processor 404 of the control unit 304 to set a first layer pulse duration in a millisecond range as per step 502, set a first layer pulse shape defining a varying energy level over time for a first layer pulse as per step 504, set a second layer pulse duration in the millisecond range as per step 506, and set a second layer pulse shape defining a varying energy level over time for a second layer pulse as per step 508. The control unit 304 is configured for providing the laser emitting device 302 with command signals for generating at least one first layer pulse having the first layer pulse duration and the first layer pulse shape to drill through the first layer as per step 510, and generating at least one second layer pulse having the second layer pulse duration and the second layer pulse shape to drill through the second layer as per step 512.

The steps of the method may be repeated for N layers, whereby the Nth layer pulse duration and Nth layer pulse shape are set by the control unit 304, and the Nth layer pulse is applied by the laser emitting device 302. The pulse durations and pulse shapes may be set for all layers before any pulses are applied. Alternatively, the parameters for a first layer are set, at least one pulse having those parameters is applied, and the parameters for a subsequent layer are set after the first layer has been drilled. In some embodiments, the operator of the laser emitting device 302 may decide the order of the steps to be performed.

In some embodiments, setting the pulse shape and/or pulse duration comprises receiving a user defined pulse shape and/or duration. For example, the user interface 306 may be configured to allow the user to enter a specific value for pulse duration, such as 0.25 ms, using a keypad or a touchscreen. The user interface 306 may also be configured to allow the user to shape the pulse as desired, for example using a mouse or a touchscreen. Alternatively, the user interface 306 may be configured to allow the user to select from multiple predefined pulse shapes and/or durations, for example using a dropdown menu or a set of numbered input keys. Other means of providing user-defined inputs may also be used.

In some embodiments, setting the pulse shape and/or pulse duration comprises receiving drilling parameters related to the drilling procedure and/or component, to be used by the control unit 304 for selecting pulse shape and/or duration. For example, the user may enter, via the user interface 306, information such as a material type for each layer, a material thickness for each layer, a number of layers, a drilling angle, a hole shape, or other information that may be used to determine an optimal pulse shape and/or duration. For example, a drilling angle may vary from about 15 to about 90 degrees and this may affect the selection of an optimal pulse shape and/or duration. The control unit 304 may be configured to select, based on the received drilling parameters, from a list of predefined pulse durations and/or pulse shapes, based on predetermined configurations. For example, the control unit 304 may be configured to choose from three predetermined pulse shapes for drilling through metal, and the selection of which one of the three pulse shapes may be made based on additional information such as the thickness of the metal layer. A predetermined setting may associate a given pulse shape and/or duration with a given material having a thickness ranging between x and y units. Other such associations may also be provided. The control unit 304 may be configured to access a look-up table with the predetermined settings and select, based on the drilling parameters, an optimal pulse shape and/or duration for each layer of material of the component.

In some embodiments, the memory 402 of the control unit 304 is a computer readable medium having stored thereon program code executable by the processor 404 for causing the laser emitting device 302 to drill holes in the component 300 composed of at least a first layer and a second layer of material. The program code comprises instructions for setting a first layer pulse duration in a millisecond range; setting a first layer pulse shape defining a varying energy level over time for a first layer pulse; setting a second layer pulse duration in the millisecond range; and setting a second layer pulse shape defining a varying energy level over time for a second layer pulse. The program code also comprises instructions for sending a first command to the laser emitting device 302 to generate at least one first layer pulse having the first layer pulse duration and the first layer pulse shape to drill through the first layer; and sending a second command to the laser emitting device 302 to generate at least one second layer pulse with the laser having the second layer pulse duration and the second layer pulse shape to drill through the second layer.

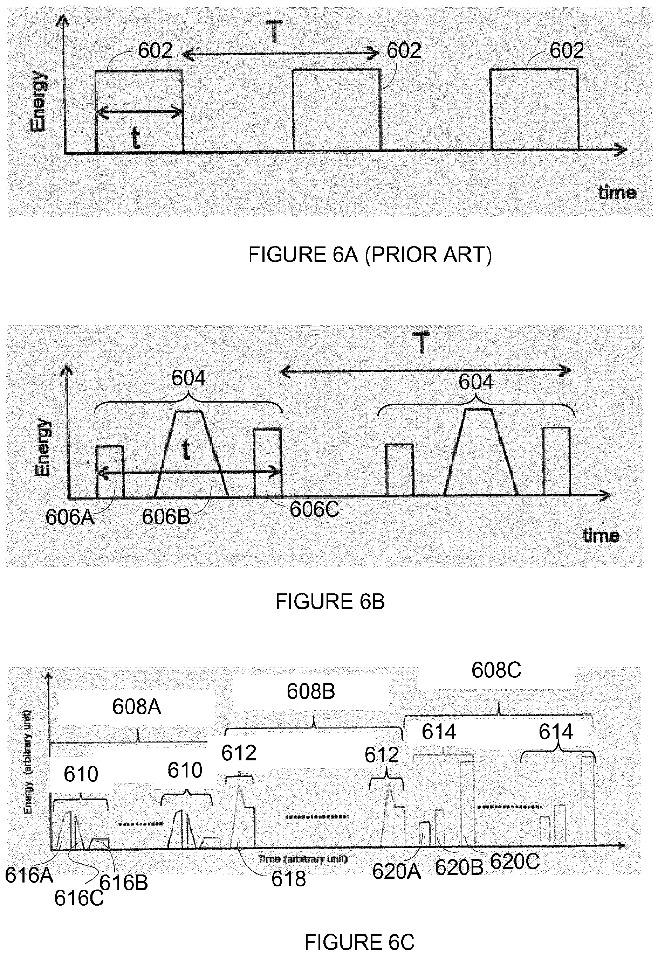

Figure 6a illustrates a set of pulses 602 in accordance with the prior art. Each pulse 602 has a duration t and the pulse train has a period T. The frequency of the laser is 1/T. Figure 6b illustrates a first exemplary embodiment of a pulse train having two pulses 604, each pulse 604 having a varying level of energy over time. In some embodiments, and as illustrated in this example, a pulse 604 of duration t is segmented into segments, such as segments 606a, 606b, 606c. Each segment is separated by an energy level of zero within the single pulse 604. Segment 606a has a same shape as segment 606c but a lower energy level, while segment 606b differs from segments 606a and 606c in shape and energy level. Pulse 604 is applied at least once for drilling through a given level, and may be repeated several times. Segmented pulses 604 comprise two or more segments, of varying shape, and/or varying energy level.

Figure 6c is illustrates an example of pulses for a first layer 608a, a second layer 608b, and a third layer 608c of a given component. For the first layer 608a, a pulse 610 is segmented into three segments 616a, 616b, 616c and applied m times to the first layer to drill therethrough. For the second layer 608b, a pulse 612 is unsegmented but shaped with a varying energy level over time 618, and applied n times to the second layer to drill therethrough. For the third layer 608c, a pulse 614 is segmented into three segments 620a, 620b, 620c and applied p times to the third layer to drill therethrough. Each layer is thus drilled through with a pulse shape that is optimal, a pulse duration that is optimal, and a number of pulses that are optimal for the drilling parameters of the layer.

The pulse shapes and pulse durations are different from one layer to another, depending on the drilling parameters of each layer, and the number of pulses applied may be the same or different from one layer to another, depending on the drilling parameters of each layer. As such, setting a second layer pulse shape as per step 508 comprises selecting a pulse shape different from the first layer pulse shape. Setting a second layer pulse duration as per step 506 comprises selecting a pulse duration different from the first layer pulse duration. Applying at least one second layer pulse as per step 512 may comprise applying a different number of pulses to the second layer than applied to the first layer.

In some embodiments, the method further comprises setting a first layer laser frequency and setting a second layer laser frequency. Applying at least one first layer pulse with a laser comprises using the first layer laser frequency and applying at least one second layer pulse with the laser comprises using the second layer laser frequency. Note that the frequency of the laser may vary from one layer to another. As such, setting a second layer laser frequency may comprise selecting a laser frequency different from the first layer laser frequency.

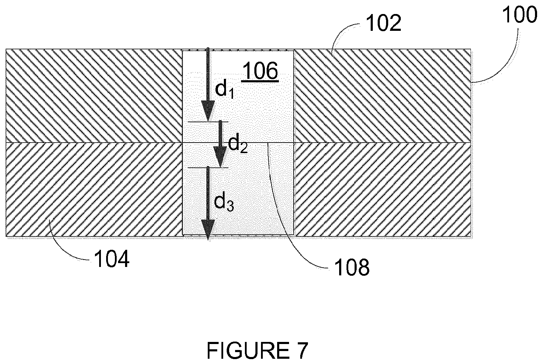

In some embodiments, pulse shape and/or duration may vary within a same layer of material. For example, a first portion of the first layer may be drilled through using pulses 610, while a second portion of the first layer may be drilled through using pulses 612. This technique may be used, for example, for thicker material where the change in pulse shape and/or duration occurs closer to the interface with the second layer, in order to speed up the drilling process. Only the portion of the first layer that interfaces with the second layer is drilled through using given settings, while the rest of the component is drilled through using other settings. For example, referring to figure 7, there is illustrated a cross-sectional view of the component 100 of figure 1. Depth d₁ is contained entirely in the first layer 102, depth d₂ straddles the first layer 102 and the second layer 104, and depth d₃ is contained entirely in the second layer 104. Drilling of depths d₁ and d₃ may occur using same or different beam parameters (i.e. pulse duration, pulse shape), while drilling of depth d₂ may occur using a different set of beam parameters in order to account for the interface 108 between the first layer 102 and the second layer 104.

In some embodiments, the method of drilling holes in components composed of at least a first layer and a second layer of material comprises setting a first pulse duration in a millisecond range, setting a first pulse shape defining a varying energy level over time for a first pulse, setting a second pulse duration in the millisecond range, and setting a second pulse shape defining a varying energy level over time for a second pulse. At least one first pulse having the first pulse duration and the first pulse shape is applied to drill through a portion of the component that does not comprise an interface between the first layer and the second layer, and at least one second pulse having the second pulse shape and the second pulse duration is applied to drill through a portion of the component that comprises the interface between the first layer and the second layer. A system for drilling holes in components composed of at least a first layer and a second layer of material comprises a control unit comprising a processor and a memory, and a user interface operatively connected to the control unit. The user interface is responsive to user input for causing the processor of the control unit to set a first pulse duration in a millisecond range, set a first pulse shape defining a varying energy level over time for a first pulse, set a second pulse duration in the millisecond range, and set a second pulse shape defining a varying energy level over time for a second pulse. The system also comprises a laser emitting device operatively connected to the control unit and configured for receiving command signals from the control unit and applying at least one first pulse having the first pulse duration and the first pulse shape to drill through a portion of the component that does not comprise an interface between the first layer and the second layer and at least one second pulse having the second pulse shape and the second pulse duration to drill through a portion of the component that comprises the interface between the first layer and the second layer. A computer readable medium having stored thereon program code executable by a processor for causing a laser emitting device to drill holes in components composed of at least a first layer and a second layer of material comprises instructions for comprises setting a first pulse duration in a millisecond range, setting a first pulse shape defining a varying energy level over time for a first pulse, setting a second pulse duration in the millisecond range, and setting a second pulse shape defining a varying energy level over time for a second pulse. The program code also comprises instructions for sending a first command to the laser emitting device to generate at least one first pulse having the first pulse duration and the first pulse shape to drill through a portion of the component that does not comprise an interface between the first layer, and sending a second command to the laser emitting device to generate at least one second pulse having the second pulse shape and the second pulse duration to drill through a portion of the component that comprises the interface between the first layer and the second layer.

All of the embodiments described with regards to figures 1 to 6 are applicable to the method as described with regards to figure 7.

The above description is meant to be exemplary only, and one skilled in the relevant arts will recognize that changes may be made to the embodiments described without departing from the scope of the invention disclosed. For example, the blocks and/or operations in the flowcharts and drawings described herein are for purposes of example only. There may be many variations to these blocks and/or operations without departing from the teachings of the present disclosure. For instance, the blocks may be performed in a differing order, or blocks may be added, deleted, or modified. While illustrated in the block diagrams as groups of discrete components communicating with each other via distinct data signal connections, it will be understood by those skilled in the art that the present embodiments are provided by a combination of hardware and software components, with some components being implemented by a given function or operation of a hardware or software system, and many of the data paths illustrated being implemented by data communication within a computer application or operating system. The structure illustrated is thus provided for efficiency of teaching the present embodiment. The present disclosure may be embodied in other specific forms without departing from the subject matter of the claims. Also, one skilled in the relevant arts will appreciate that while the systems, methods and computer readable mediums disclosed and shown herein may comprise a specific number of elements/components, the systems, methods and computer readable mediums may be modified to include additional or fewer of such elements/components. The present disclosure is also intended to cover and embrace all suitable changes in technology. Modifications which fall within the scope of the present invention will be apparent to those skilled in the art, in light of a review of this disclosure, and such modifications are intended to fall within the appended claims.

## Claims

1. A method for drilling a hole in a component (300) with a laser (302), the component (300) composed of at least a first layer (608a) of a first material and a second layer (608b) of a second material different from the first material, the method comprising:
setting a first layer pulse duration in a millisecond range; and
setting a first layer pulse shape defining a varying energy level over time for a first layer pulse;
**characterized by** further comprising:
setting a second layer pulse duration in the millisecond range;
setting a second layer pulse shape defining a varying energy level over time for a second layer pulse;
generating at least one first layer pulse (610) having the first layer pulse duration and the first layer pulse shape to drill the hole through the first layer (608a); and
generating at least one second layer pulse (612) having the second layer pulse duration and the second layer pulse shape to drill the hole through the second layer (608b),
wherein setting a second layer pulse shape comprises selecting a pulse shape different from the first layer pulse shape, and setting a second layer pulse duration comprises selecting a pulse duration different from the first layer pulse duration,
wherein at least one of setting a first layer pulse shape and setting a second layer pulse shape comprises selecting a shape comprising at least two segments (616a, 616c) separated by an energy level of zero within a single pulse, the at least two segments (616a, 616c) differing in at least one of shape and energy level.

2. The method of claim 1, wherein at least one of generating at least one first layer pulse and generating at least one second layer pulse comprises generating the single pulse multiple times.

3. The method of claim 1 or 2, wherein applying at least one second layer pulse comprises generating a different number of pulses to the second layer than generated for the first layer.

4. The method of any preceding claim, further comprising setting a first layer laser frequency and setting a second layer laser frequency, and wherein generating at least one first layer pulse with a laser comprises using the first layer laser frequency and generating at least one second layer pulse with the laser comprises using the second layer laser frequency.

5. The method of claim 4, wherein setting a second layer laser frequency comprises selecting a laser frequency different from the first layer laser frequency.

6. The method of any preceding claim, wherein generating the at least one first layer pulse comprises generating a pulse with a first spot size and generating the at least one second layer pulse comprises generating a pulse with a second spot size different from the first spot size.

7. The method of any preceding claim, further comprising:
drilling through the first layer (608a) by applying at least one first layer pulse (610) from a laser (302); and
drilling through the second layer (608b) by applying at least one second layer pulse (612) from the laser.

8. The method of claim 7, wherein at least one of applying at least one first layer pulse (610) and applying at least one second layer pulse (612) comprises repeatedly applying the single pulse until having drilled through a respective one of the first layer (608a) and the second layer (608b).

9. The method of claim 7, wherein at least one of applying at least one first layer pulse (610) and applying at least one second layer pulse (612) comprises applying a single one of the at least one first layer pulse and the at least one second layer pulse to drill through a respective one of the first layer (608a) and the second layer (608b).

10. The method of claim 8, wherein applying at least one first layer pulse (610) comprises applying a first plurality of segmented and repeated pulses to drill through the first layer (608a), and wherein applying at least one second layer pulse (612) comprises applying a second plurality of segmented and repeated pulses to drill through the second layer (608b).

11. The method of claim 10, wherein the first plurality of segmented and repeated pulses differ from the second plurality of segmented and repeated pulses in at least one of number of segments per pulse and duration of each segment.

## Patentansprüche

1. Verfahren zum Bohren eines Lochs in ein Bauteil (300) mit einem Laser (302), wobei das Bauteil (300) aus mindestens einer ersten Schicht (608a) aus einem ersten Material und einer zweiten Schicht (608b) aus einem zweiten Material besteht, das sich von dem ersten Material unterscheidet, wobei das Verfahren umfasst:
Einstellen einer Impulsdauer der ersten Schicht in einem Millisekundenbereich; und
Einstellen einer Impulsform der ersten Schicht, die ein zeitlich variierendes Energieniveau für einen Impuls der ersten Schicht definiert;
**dadurch gekennzeichnet, dass** es ferner umfasst:
Einstellen einer Impulsdauer der zweiten Schicht im Millisekundenbereich;
Einstellen einer Impulsform der zweiten Schicht, die ein zeitlich variierendes Energieniveau für einen Impuls der zweiten Schicht definiert;
Erzeugen mindestens eines Impulses (610) der ersten Schicht, der die Impulsdauer der ersten Schicht und die Impulsform der ersten Schicht aufweist, um das Loch durch die erste Schicht (608a) zu bohren; und
Erzeugen mindestens eines Impulses (612) der zweiten Schicht, der die Impulsdauer der zweiten Schicht und die Impulsform der zweiten Schicht aufweist, um das Loch durch die zweite Schicht (608b) zu bohren,
wobei das Einstellen einer Impulsform der zweiten Schicht Auswählen einer Impulsform umfasst, die sich von der Impulsform der ersten Schicht unterscheidet, und das Einstellen einer Impulsdauer der zweiten Schicht Auswählen einer Impulsdauer umfasst, die sich von der Impulsdauer der ersten Schicht unterscheidet,
wobei mindestens eines von dem Einstellen einer Impulsform der ersten Schicht und dem Einstellen einer Impulsform der zweiten Schicht Auswählen einer Form umfasst, die mindestens zwei Segmente (616a, 616c), die durch ein Energieniveau von Null getrennt sind, innerhalb eines einzelnen Impulses umfasst, wobei sich die mindestens zwei Segmente (616a, 616c) in mindestens einem von Form und Energieniveau unterscheiden.

2. Verfahren nach Anspruch 1, wobei mindestens eines von dem Erzeugen mindestens eines Impulses der ersten Schicht und dem Erzeugen mindestens eines Impulses der zweiten Schicht Erzeugen des einzelnen Impulses mehrere Male umfasst.

3. Verfahren nach Anspruch 1 oder 2, wobei das Anwenden mindestens eines Impulses der zweiten Schicht Erzeugen einer anderen Anzahl von Impulsen für die zweite Schicht, als für die erste Schicht erzeugt werden, umfasst.

4. Verfahren nach einem vorhergehenden Anspruch, ferner umfassend Einstellen einer Laserfrequenz der ersten Schicht und Einstellen einer Laserfrequenz der zweiten Schicht, und wobei das Erzeugen mindestens eines Impulses der ersten Schicht mit einem Laser Verwenden der Laserfrequenz der ersten Schicht und das Erzeugen mindestens eines zweiten Impulses der zweiten Schicht Verwenden der Laserfrequenz der zweiten Schicht umfasst.

5. Verfahren nach Anspruch 4, wobei das Einstellen einer Laserfrequenz der zweiten Schicht Auswählen einer Laserfrequenz umfasst, die sich von der Laserfrequenz der ersten Schicht unterscheidet.

6. Verfahren nach einem vorhergehenden Anspruch, wobei das Erzeugen des mindestens einen Impulses der ersten Schicht Erzeugen eines Impulses mit einer ersten Punktgröße umfasst und das Erzeugen des mindestens einen Impulses der zweiten Schicht Erzeugen eines Impulses mit einer zweiten Punktgröße umfasst, die sich von der ersten Punktgröße unterscheidet.

7. Verfahren nach einem vorhergehenden Anspruch, ferner umfassend:
Bohren durch die erste Schicht (608a) durch Anwenden mindestens eines Impulses (610) der ersten Schicht von einem Laser (302); und
Bohren durch die zweite Schicht (608b) durch Anwenden mindestens eines Impulses (612) der zweiten Schicht von dem Laser.

8. Verfahren nach Anspruch 7, wobei mindestens eines von dem Anwenden mindestens eines Impulses (610) der ersten Schicht und dem Anwenden mindestens eines Impulses (612) der zweiten Schicht ein wiederholtes Anwenden des einzelnen Impulses umfasst, bis durch eine jeweilige eine der ersten Schicht (608a) und der zweiten Schicht (608b) gebohrt wurde.

9. Verfahren nach Anspruch 7, wobei mindestens eines von dem Anwenden mindestens eines Impulses (610) der ersten Schicht und dem Anwenden mindestens eines Impulses (612) der zweiten Schicht Anwenden eines einzelnen einen von dem mindestens einen Impuls der ersten Schicht und dem mindestens einen Impuls der zweiten Schicht umfasst, um durch eine jeweilige eine der ersten Schicht (608a) und der zweiten Schicht (608b) zu bohren.

10. Verfahren nach Anspruch 8, wobei das Anwenden mindestens eines Impulses (610) der ersten Schicht Anwenden einer ersten Vielzahl von segmentierten und wiederholten Impulsen umfasst, um durch die erste Schicht (608a) zu bohren, und wobei das Anwenden mindestens eines Impulses (612) der zweiten Schicht Anwenden einer zweiten Vielzahl von segmentierten und wiederholten Impulsen umfasst, um durch die zweite Schicht (608b) zu bohren.

11. Verfahren nach Anspruch 10, wobei sich die erste Vielzahl von segmentierten und wiederholten Impulsen von der zweiten Vielzahl von segmentierten und wiederholten Impulsen in mindestens einem von der Anzahl von Segmenten pro Impuls und der Dauer jedes Segments unterscheidet.

## Revendications

1. Procédé de perçage d'un trou dans un composant (300) avec un laser (302), le composant (300) étant composé d'au moins une première couche (608a) d'un premier matériau et d'une seconde couche (608b) d'un second matériau différent du premier matériau, le procédé comprenant :
le réglage d'une durée d'impulsion de première couche dans une plage de millisecondes ; et
le réglage d'une forme d'impulsion de première couche définissant un niveau d'énergie variable dans le temps pour une impulsion de première couche ;
**caractérisé en ce qu'**il comprend en outre :
le réglage d'une durée d'impulsion de seconde couche dans la plage de millisecondes ;
le réglage d'une forme d'impulsion de seconde couche définissant un niveau d'énergie variable dans le temps pour une impulsion de seconde couche ;
la génération d'au moins une impulsion de première couche (610) ayant la durée d'impulsion de première couche et la forme d'impulsion de première couche pour percer le trou à travers la première couche (608a) ; et
la génération d'au moins une impulsion de seconde couche (612) ayant la durée d'impulsion de seconde couche et la forme d'impulsion de seconde couche pour percer le trou à travers la seconde couche (608b),
dans lequel le réglage d'une forme d'impulsion de seconde couche comprend la sélection d'une forme d'impulsion différente de la forme d'impulsion de première couche, et le réglage d'une durée d'impulsion de seconde couche comprend la sélection d'une durée d'impulsion différente de la durée d'impulsion de première couche,
dans lequel au moins l'un parmi le réglage d'une forme d'impulsion de première couche et le réglage d'une forme d'impulsion de seconde couche comprend la sélection d'une forme comprenant au moins deux segments (616a, 616c) séparés par un niveau d'énergie de zéro dans une seule impulsion, les au moins deux segments (616a, 616c) différant par au moins une forme et un niveau d'énergie.

2. Procédé selon la revendication 1, dans lequel au moins l'une parmi la génération d'au moins une impulsion de première couche et la génération d'au moins une impulsion de seconde couche comprend la génération de l'impulsion unique plusieurs fois.

3. Procédé selon la revendication 1 ou 2, dans lequel l'application d'au moins une impulsion de seconde couche comprend la génération d'un nombre d'impulsions différent vers la seconde couche que celui généré pour la première couche.

4. Procédé selon une quelconque revendication précédente, comprenant en outre le réglage d'une fréquence laser de première couche et le réglage d'une fréquence laser de seconde couche, et dans lequel la génération d'au moins une impulsion de première couche avec un laser comprend l'utilisation de la fréquence laser de première couche et la génération d'au moins une impulsion de seconde couche avec le laser comprend l'utilisation de la fréquence laser de seconde couche.

5. Procédé selon la revendication 4, dans lequel le réglage d'une fréquence laser de seconde couche comprend la sélection d'une fréquence laser différente de la fréquence laser de première couche.

6. Procédé selon une quelconque revendication précédente, dans lequel la génération de l'au moins une impulsion de première couche comprend la génération d'une impulsion avec une première taille de point et la génération de l'au moins une impulsion de seconde couche comprend la génération d'une impulsion avec une seconde taille de point différente de la première taille de point.

7. Procédé selon une quelconque revendication précédente, comprenant en outre :
le perçage à travers la première couche (608a) en appliquant au moins une impulsion de première couche (610) à partir d'un laser (302) ; et
le perçage à travers la seconde couche (608b) en appliquant au moins une impulsion de seconde couche (612) à partir du laser.

8. Procédé selon la revendication 7, dans lequel au moins l'une parmi l'application d'au moins une impulsion de première couche (610) et l'application d'au moins une impulsion de seconde couche (612) comprend l'application répétée de l'impulsion unique jusqu'à ce qu'elle ait percé l'une respective de la première couche (608a) et de la seconde couche (608b).

9. Procédé selon la revendication 7, dans lequel au moins l'une parmi l'application d'au moins une impulsion de première couche (610) et l'application d'au moins une impulsion de seconde couche (612) comprend l'application d'une seule parmi l'au moins une impulsion de première couche et l'au moins une impulsion de première couche et l'au moins une impulsion de seconde couche pour percer à travers l'une respective de la première couche (608a) et de la seconde couche (608b).

10. Procédé selon la revendication 8, dans lequel l'application d'au moins une impulsion de première couche (610) comprend l'application d'une première pluralité d'impulsions segmentées et répétées pour percer à travers la première couche (608a), et dans lequel l'application d'au moins une impulsion de seconde couche (612) comprend l'application d'une seconde pluralité d'impulsions segmentées et répétées pour percer à travers la seconde couche (608b).

11. Procédé selon la revendication 10, dans lequel la première pluralité d'impulsions segmentées et répétées diffère de la seconde pluralité d'impulsions segmentées et répétées en au moins un parmi le nombre de segments par impulsion et la durée de chaque segment.
